# EUROPEAN PATENT SPECIFICATION

(11) **EP 2 839 324 B1**
(45) Date of publication and mention of the grant of the patent: **06.02.2019**
(21) Application number: 13731872.1
(22) Date of filing: 16.04.2013
(51) Int. Cl.: G02B 3/14, G02B 26/00, G02C 7/08

(54) **ELECTROWETTING OPTICAL DEVICE WITH LOW POWER CONSUMPTION**
OPTISCHE VORRICHTUNG MIT ELEKTROBENETZUNG UND MIT NIEDRIGER LEISTUNGSAUFNAHME
DISPOSITIF OPTIQUE À ÉLECTROMOUILLAGE AVEC CONSOMMATION DE PUISSANCE FAIBLE

(30) Priority: 16.04.2012 US 201261624569 P
(43) Date of publication of application: 25.02.2015
(73) Proprietor: Invenios France, 69007 Lyon (FR)
(72) Inventor: BERGE, Bruno, 69008 Lyon (FR); MAILLARD, Mathieu, 69007 Lyon (FR)
(74) Representative: Osha Liang
(86) International application number: PCT/IB2013/001134
(87) International publication number: WO 2013/156865

(56) References cited:
- WO-A1-2011/092892
- WO-A1-2011/157826
- US-A1- 2012 293 484
- US-B2- 7 311 398
- US-B2- 7 446 945
- US-B2- 7 791 814

## Description

### TECHNICAL FIELD OF INVENTION

The present invention relates to an electrowetting optical device, a method for controlling said electrowetting optical device, and an apparatus comprising said electrowetting optical device.

### BACKGROUND

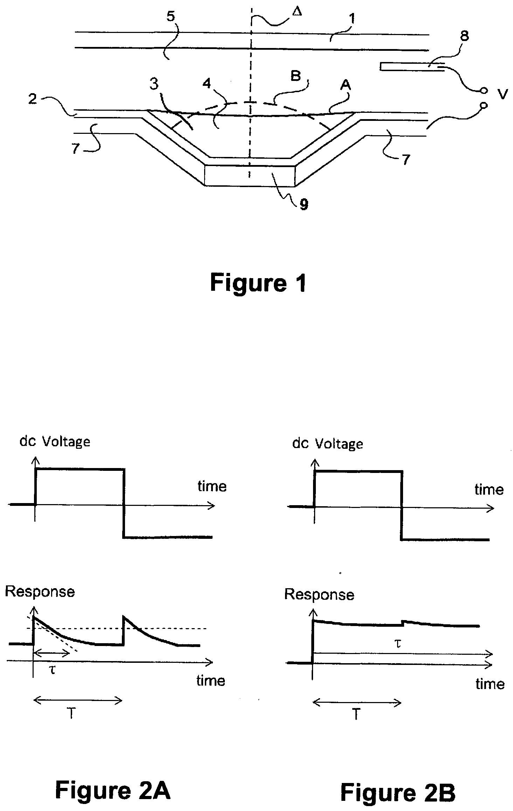

Electrowetting optical devices driven by electrowetting and of variable focal length are described in European Patent EP-B1-1,166,157. Figure 1 shows a simplified cross-section view of an example of an electrowetting optical device. An electrowetting optical device comprises a cell which is defined by a cell casing comprising a insulating plate (1) (i.e. higher plate), side walls (not shown), and a dielectric enclosure (2) which enclose a electrically conductive liquid (5) and a electrically non-conductive liquid (4), the dielectric enclosure (2) having a low wettability with respect to the electrically conductive liquid (5) (hydrophobic). The dielectric enclosure (2), which is non-planar, comprises also a conical or cylindrical depression (3) (i.e. recess, hollow) centered around an axis Δ perpendicular to this plate and which contains a drop of the electrically non-conductive liquid (4). In Figure 1, the depression (3) is a truncated cone. The remainder of the cell is filled with the conductive liquid (5), non-miscible with the non-conductive liquid (4), having a different refractive index and substantially the same density. The dioptre formed between liquids 4 and 5 forms a surface, the optical axis of which is axis Δ and the other surface of which corresponds to the contact between the drop and the bottom of the hollow. While an annular electrode (7) is positioned on the external surface of dielectric enclosure, another electrode (8) is in contact with the conductive liquid (5). Reference numeral 9 indicates a glass or plastic wall. A voltage source (not shown) enables applying an alternative current (i.e. AC) voltage V between electrodes 7 and 8. The conductive liquid (5) generally is an aqueous liquid containing salts. The non-conductive liquid (4) is typically an oil, an alkane, or a mixture of alkanes, possibly halogenated. The dielectric enclosure (2) usually comprises or is made of a transparent material coated with a material that is hydrophobic.

Through electrowetting effect (i.e. electrowetting phenomena, electrowetting response), the curvature of the interface between the two liquids is modified, according to the voltage V applied between the electrodes. Thus, a beam of light passing through the cell normal to the insulating plate (1) and the dielectric enclosure (2) in the region of the drop of the non-conductive liquid (4) will be focused to a greater or lesser extent according to the voltage applied. Upon a control signal, a voltage is applied between the electrodes. The applied voltage induces via said electrowetting effect a change in the contact angle of the drop of non-conductive liquid (4). As shown in Figure 1, the shape of the drop changes from shape A (flat drop) to shape B (curved drop) while the voltage varies. As the indices of refraction of the two liquids are different, the device forms a variable power electrowetting optical device whose dioptric variation can range from a few diopters to several tens of diopters.

An electrowetting optical device can be used in an inside or outside environment in an apparatus such as a camera, a cell phone, a barcode reader, and the like.

Published patent application WO 2011/067391 describes other applications of electrowetting optical devices such as in an automatic focusing ophthalmic device. Such automatic focusing ophthalmic device is for example eyeglasses, contact lenses, intraocular lens implants, or ophthalmology instruments. While contact lenses or eyeglasses are being developed to correct the focusing loss that comes along with presbyopia and other accommodation disorders such as myopia, hyperopia, or astigmatism, another situation arises when people are loosing accommodation after a cataract surgery: following surgical removal of a natural lens, a non automatic focusing intraocular lens implant is inserted, which is a fixed focal lens made of a transparent polymer. However, such non automatic focusing intraocular lens implant may be limited because patient is only recovering vision at a given focus. Therefore the patient is unable to focus on objects at various distances. It is thus of great interest to achieve electrowetting based automatic focusing ophthalmic devices.

One common difficulty for electrowetting optical devices is to be able to insert said devices in a portable, lightweight, and/or small apparatus having a suitable small battery or any other power source that allows the electrowetting optical device to be powered efficiently and to be operated without sacrificing longevity between charges, weight, and/or size. Due to the limited space available on various electrowetting optical device applications (e.g. automatic focusing ophthalmic devices), it is of a great interest to limit the available power consumption of the electrowetting optical device to a minimum, typically in the order of a few microwatts, preferably tens of nanowatts. For cameras, cell phones, barcode readers and the like, the limits in size and weight of the devices also bring constraints on the power sources (i.e. battery type), which results in the same goal of achieving an electrowetting optical device consuming no more than a few microwatts, preferably tens of nanowatts. Additionally to the above-mentioned constraints, it is also desirable to solely provide electrowetting optical devices having small power consumption and thus allowing for an increased longevity between charges or between the replacement of the power source.

It has been shown that the variation of the contact angle with voltage is theoretically proportional to the square of the applied voltage (see for example B. Berge, "Electrocapillarity and wetting of insulator films by water" Comptes rendus de l'Académie des sciences - Série deux, Mécanique, physique, chimie, sciences de l'univers, sciences de la terre - ISSN 0764-4450 - 1993, vol. 317, no2, pp. 157-163). The contact angle *θ* can be expressed as a function of the voltage V by the equation (1): cos *θ* = cos *θ₀* + (εε₀/2eγ)V² where ε, ε₀, γ are the dielectric constant of the insulator film, the dielectric constant of the vacuum, and the interfacial tension of the two liquids interface, respectively. Thus, the electrowetting effect can theoretically be obtained by a direct current (i.e. DC) voltage (either positive or negative), or by an AC voltage, the voltage V in equation (1) being replaced by its RMS (i.e. root mean square) value: V_{RMS} = √(V²).

Both type of AC or DC voltage may be used to power an electrowetting optical device. Using AC voltage may result in a very stable electrowetting optical device, wherein the optical power correction (e.i. dioptric correction, optical correction) is very stable with time. However, the power consumption may be high (typically a few tens of mW). Using DC voltage may allow a low power consumption as there is no need for producing current for voltage reversal. However, the dioptric correction may not be stable with time due to the presence of dielectric failure (i.e. charge injection, dielectric breakdown), as explained below.

As shown in Figures 2A and 2B, when a DC voltage or a low frequency AC voltage (such as in a quasi-DC situation) is applied, dielectric failure occurs which causes a decrease of the electrowetting effect with a time constant τ (i.e. injection time) ranging from tens of milliseconds to tens of seconds. Usually, when the correction is applied for very long times (e.g. tens of minutes) the electrowetting effect completely vanishes. Upon polarization reversal, the electrowetting effect is restored. Figures 2A and 2B show typical responses of an electrowetting optical device driven by DC voltage or a low frequency AC voltage. On top of each figure is shown the DC voltage applied to the electrowetting optical device as a function of time. For each example, a polarization reversal is applied with a half period T. On the bottom of each figure is shown the electrowetting response in arbitrary units. The electrowetting response may be either the contact angle, the electrowetting optical device optical power in diopters, or any other direct or indirect measurement of the liquid drop shape, as for example its capacitance. In the example of Figure 2A, the time constant τ of the electrowetting effect is much smaller than the half period T resulting in the decreasing of the electrowetting effect until it vanishes. Figure 2B shows the opposite case where the time constant τ of the electrowetting effect is much larger than the half period T.

A further variable focus liquid lens comprising a conductive liquid comprising dications or dianions is disclosed in US-B2-7791814.

Accordingly, there exists a continuing need for developments in electrowetting technology and means for providing reliable electrowetting optical devices with longer time constants τ and thus having smaller power consumption.

### SUMMARY

According to a first aspect, the invention relates to a method for controlling an electrowetting optical device as specified in the appended claim 1.

According to a second aspect, the invention relates to an apparatus as specified in the appended claim 7.

The present disclosure will now be described in further details by way of nonlimiting examples and by reference to the attached drawings.

### BRIEF DESCRIPTION OF DRAWINGS

Figure 1 (already described, prior art) shows a simplified cross-section view of an electrowetting optical device.
Figures 2A and 2B (already described, prior art) show responses of an electrowetting optical device in function of an applied voltage in two configurations.
Figure 3 is a graph showing the evolution of the contact angle (°) of an electrowetting optical device according to an embodiment of the disclosure obtained in a time sequence using CaCl₂ in the conductive liquid, under DC positive polarisation between 10 V and 50 V (10 V steps).
Figure 4 is a graph showing the evolution of the contact angle (°) of an electrowetting optical device according to an embodiment of the disclosure obtained in a time sequence using succinic acid in the conductive liquid, under low frequency AC voltage (40 V, 0.1 Hz).
Figure 5 is a graph showing the evolution of the contact angle (°) of an electrowetting optical device according to an embodiment of the disclosure obtained in a time sequence using NaBr in the conductive liquid with a dielectric enclosure coated with Cytop® and Parylen C, under DC negative and positive polarisation between 10 V and 50 V (10 V steps).
Figure 6 is a graph showing the evolution of the contact angle (°) of an electrowetting optical device according to an embodiment of the disclosure obtained in a time sequence using succinic acid in the conductive liquid with a dielectric enclosure coated with Cytop® and Parylen C, under DC negative and positive polarisation between 10 V and 50 V (10 V steps).
Figure 7 is a graph showing the evolution of the contact angle (°) of an electrowetting optical device according to an embodiment of the disclosure obtained in a time sequence using a NaH₂PO₄ in the conductive liquid with a dielectric enclosure coated with Parylen C, under low frequency AC voltage (40 V, 1 Hz).
Figure 8 shows a variation compensation square waveform under low frequency AC voltage (40 V, 2 Hz) with a duty cycle of 80 % (corresponding to 400 ms positive and 100 ms negative).
Figure 9 shows a variation compensation square waveform under low frequency AC voltage (2 Hz) with an offset applied between a positive polarization (+37 V) and a negative polarization (-43 V).
Figure 10 shows a variation compensation square waveform under low frequency AC voltage (2 Hz) with a duty cycle of 80 % (corresponding to 400 ms positive and 100 ms negative) and an offset applied between a positive polarization (+37 V) and a negative polarization (-43 V).
Figure 11 is a graph showing the evolution of the contact angle (°) of an electrowetting optical device according to an embodiment of the disclosure obtained in a time sequence using NaH₂PO₄ in the conductive liquid (5) with a dielectric enclosure (2) coated with Parylen C, under low frequency AC voltage (2 Hz) with the variation compensation square waveform of Figure 10.

### DETAILED DESCRIPTION

Specific embodiments of the present invention will now be described in detail with reference to the accompanying figures. In the following detailed description of embodiments of the present invention, numerous specific details are set forth in order to provide a more thorough understanding of the present invention. However, it will be apparent to one of ordinary skill in the art that the present invention may be practiced without these specific details. In other instances, well-known features have not been described in detail to avoid unnecessarily complicating the description.

Herein, the words "comprise/comprising" are synonymous with (means the same thing as) "include/including," "contain/containing", are inclusive or open-ended and do not exclude additional, unrecited elements. Limit values of ranges using for example the words "from", "from...to", "bellow", "more than", "greater than", "less than", "lower than", and "at least" are considered included in the ranges.

The terms "non-miscible" and "immiscible" refer to liquids that are non-miscible or substantially non-miscible, one into the other. In the present description and in the following claims, two liquids are considered non-miscible when their partial miscibility is below 0.2 %, preferably below 0.1 %, more preferably below 0.05 %, even more preferably below 0.02 %, all values being measured within a given temperature range, for example at 20°C.

In the present description and in the following claims, either one or both the conductive (5) and the non-conductive liquids (4), as well as the electrowetting optical device, the dielectric enclosure (2), and/or the insulating plate (1) may be transparent. Transparency is to be understood as a transmission of more than about 96 % over a wavelength range of from about 400 nm to about 700 nm and/or a scattering energy of less than about 2 % in an about 60° (degrees) cone around the direct incidence in the same wavelength range.

Herein the words "multivalent salt" (e.i. multi-ionic salt) are synonymous with (means the same thing as) an atom or group of atoms bearing either two or more negative electrical charges (i.e. multi-anionic salt), two or more positive electrical charges (i.e. multi-cationic salt), or two or more zwitterionic states. Herein the words "multivalent salt" are also synonymous with (means the same thing as) di-, tri-, tetra-, and penta-ionized organic compounds, organic salts, inorganic compounds, and inorganic salts, as well as mixture thereof. The words "multivalent salt" comprises, for example, di-cations and tri-cations such as alkaline-earth metals, di-cationic transition metals, tri-cationic transition metals, lanthanides, and the like. The words "multivalent salt" comprises also, for example, di-anions, tri-anions, tetra-anions, and penta-anions, such as dicarboxylic salts, tricarboxylic salts, tetracarboxylic salts, pentacarboxylic salts, and the like.

The words "multivalent salt" refer also to a salt that has at least one counter-ion (anionic or cationic counter-ion) totally or substantially dissociated in water, after chemical, physical or physico-chemical treatment. Examples of anionic counter-ions include, but are not limited to, halides, carbonate, hydrogen carbonate, acetate, 2-fluoracetate, 2,2-difluoroacetate, 2,2,2-trifluoroacetate, 2,2,3,3,3-pentafluoro-propanoate, trifluoromethanesulfonate (triflate), hexafluorophosphate, as well as mixtures thereof. Examples of cationic counterions include, but are not limited to, alkali metal cations, ammonium, fluorinated ammonium, as well as mixtures thereof.

Herein the words "organic compound" are synonymous with (means the same thing as) a chemical compound containing carbon.

In one or more embodiments of the invention, the organic compound may comprise a functional group selected from the group consisting of diazoniums, oxoniums, triflates, tosylates, mesylates, nitrates, phosphates, ammoniums, esters, alkyl halides, acyl halides, acid anhydrides, phenoxides, alcohols, carboxylic acids, amines, amides, thiols, and peroxy acids.

Herein the words "inorganic compound" are synonymous with (means the same thing as) a chemical compound not containing carbon besides carbon monoxide, carbon dioxide, carbonates, cyanides, cyanates, carbides, and/or thyocyanates.

Herein the words "totally or substantially dissociated", "totally or substantially hydrolysable", and "totally or substantially hydrolyzed" are synonymous with (means the same thing as) a compound bearing two or more positive electrical charge, two or more negative electrical charges, or two or more zwitterionic states while contained in the conductive liquid (5).

One objective of the present invention is to provide an electrowetting optical device having minimal dielectric failure, i.e. having longer and more reliable electrowetting effect by providing an electrowetting device with a time constant τ longer than 90 seconds, preferably longer than 180 seconds, more preferably longer than 300 seconds, more preferably longer than 600 seconds, more preferably longer than 1000 seconds, and having consequently a small power consumption.

Another objective of the present invention is to provide an electrowetting optical device that can be used as variable optical zoom, variable focus liquid lens, optical image stabilization device, light beam deflector, variable illumination device, a device having a variable tilt of the optical axis and any other optical device using electrowetting in an inside or outside environment in an apparatus such as an automatic focusing ophthalmic device, (e.g. intraocular lens implants, contact lenses, eyeglasses, ophthalmology instruments), a camera, a cell phone, a barcode reader and the like.

Another objective of the present invention concerns an apparatus comprising an electrowetting optical device. The apparatus comprises electronic means such as an electronic device for applying a DC voltage or a low frequency AC voltage (such as in a quasi-DC situation) to the electrowetting optical device.

Herein "low frequency AC voltage" corresponds to a voltage being applied at a frequency f lower than 10 Hz, more preferably lower than 0.5 Hz. Preferably, the voltage is applied at a frequency f ranging from 0.001 Hz to 10 Hz, more preferably from 0.001 Hz to 0.5 Hz. Preferably, the apparatus further comprises a driver or similar electronic means for controlling the electrowetting optical device. In one or more embodiments of the invention, the electrowetting optical device and the driver or similar electronic means are integrated in the apparatus. In one or more embodiments of the invention, the apparatus comprises a plurality (more than one) of electrowetting optical device and preferably at least one driver or similar electronic means.

According to the present invention, the Applicant has surprisingly found that, while applying positive or negative DC voltages to an electrowetting optical device, the presence in the conductive liquid (5) of a multivalent salt may trigger a slow decrease of the electrowetting effect having thus longer time constant τ+ or τ- due to a limitation of dielectric failure. Positive time constant τ+ corresponds to the time constant while applying a positive polarization, while negative time constant τ- corresponds to the time constant while applying a negative polarization.

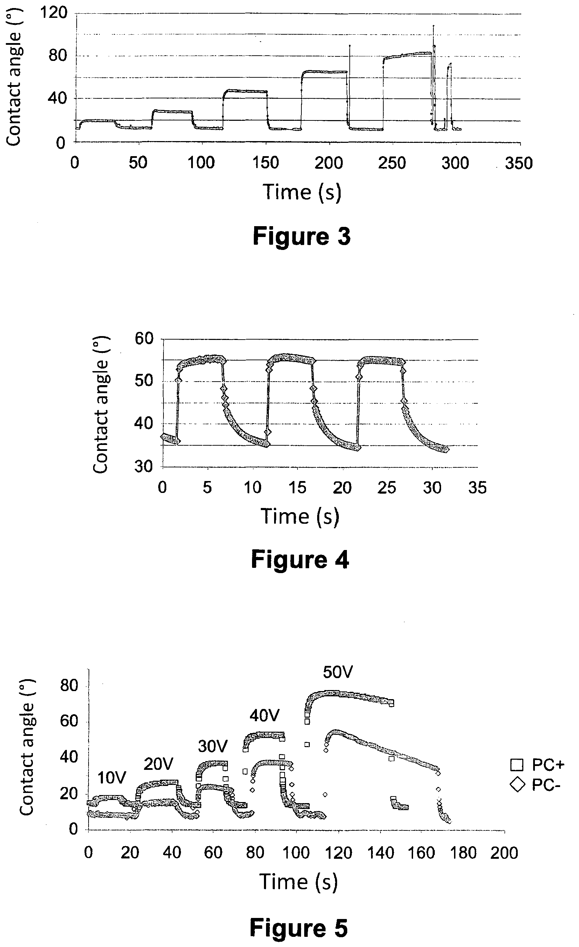

Referring to table 1 and Figure 3, the limitation of dielectric failure can occur while applying positive DC voltages to an electrowetting optical device. Indeed, the presence in the conductive liquid (5) of a multivalent salt such as calcium chloride as well as phosphoric acid salts Na₂HPO₄ and NaH₂PO₄ generates a slow decrease of the electrowetting effect having thus time constants ranging from τ+ = 106 seconds to τ+ > 1000 seconds. More specifically, Figure 3 shows the evolution of the contact angle (°) of an exemplary electrowetting optical device obtained in a time sequence using CaCl₂ in the conductive liquid (5), under DC positive polarisation between 10 V and 50 V (10 V steps).

The limitation of dielectric failure can occur also while applying negative DC voltages or low frequency AC voltages to an electrowetting optical device. Referring to table 1 and Figure 4, the presence in the conductive liquid (5) of another multivalent salt such as succinic acid triggers, once again, a slow decrease of the electrowetting effect having not only a positive time constant τ+ >500 seconds but also a negative time constant τ- > 500 seconds. More specifically, Figure 4 shows the evolution of the contact angle (°) of an exemplary electrowetting optical device obtained in a time sequence using succinic acid in the conductive liquid (5), under low frequency AC voltage (40 V, 0.1 Hz).

**Table 1**

| Salt | Valence +- | pH | τ+ (s) | τ-(s) |
|---|---|---|---|---|
| NaBr | 1-1 | 5.6 | 40 | 1.3 |
| CaCl₂ | 2-1 | 5.9 | > 1000 | 1.5 |
| LiCl | 1-1 | 5.2 | 40 | 0.3 |
| KCH₃COOH | 1-1 | 7.5 | 11 | 0.6 |
| Na₂HPO₄ | 1-2 | 9 | 106 | 3 |
| NaH₂PO₄ | 1-2 | 5.3 | 106 | 21 |
| Succinic acid /succinate | 1-2 | 4.5 | >500 | 10 |

In one or more embodiments, the conductive liquid (5) comprises from 0.001 % by weight to 10 % by weight of at least one multivalent salt, based the total weight of the conductive liquid (5).

In one or more embodiments of the invention, the conductive liquid (5) comprises water and from 0.001 % by weight to 10 % by weight, preferably from 0.01 % by weight to 5 % by weight, preferably from 0.1 % by weight to 3 % by weight of at least one multivalent salt, based on the total weight of the conductive liquid (5).

In one or more embodiments of the invention, the at least one multivalent salt of may be an inorganic compound, being totally or substantially hydrolysable into a di-cation or a tri-cation.

In one or more embodiments of the invention, the at least one multivalent salt is selected from the group consisting of alkaline-earth metals, di-cationic transition metals, tri-cationic transition metals, lanthanides, as well as mixtures thereof.

In one or more embodiments of the invention, the at least one multivalent salt is selected from the group consisting of tri-cationic transition metals, lanthanides, as well as mixtures thereof.

In one or more embodiments of the invention, the at least one multivalent salt is at least one alkaline-earth metal, as well as mixtures thereof.

In one or more embodiments of the invention, the at least one multivalent salt is a calcium halide, as well as mixtures thereof.

In one or more embodiments of the invention, the multivalent salt is calcium chloride.

In one or more embodiments of the invention, the at least one multivalent salt is selected from the group consisting of di-, tri-, tetra-, and pent-ionized organic compounds and organic salts, as well as mixture thereof. For example, said ionized organic compounds and organic salts may be totally or substantially hydrolysed into a di-, tri-, tetra-, or penta-anion. Examples of such multivalent organic compound or salts include, but are not limited to dicarboxylic acid (R²(COOH)₂, where R² is an alkyl group CₙH₂ₙ with n between 1 and 10), tricarboxylic acid (R³(COOH)₃, where R³ is an alkyl group CₙH₂ₙ₋₁ with n between 1 and 11), tetracarboxylic acid (R⁴(COOH)₄, where R⁴ is an alkyl group CₙH₂ₙ₋₂ with n between 1 and 12), pentacarboxylic acid (R⁵(COOH)₅, where R⁵ is an alkyl group CₙH₂ₙ₋₃ with n between 1 and 13), or corresponding carboxylate salt, as well as mixtures thereof.

In one or more embodiments of the invention, the at least one multivalent salt is a di-ionized organic compound or corresponding salt, as well as mixtures thereof, being totally or substantially hydrolyzed into a di-anion.

In one or more embodiments of the invention, the at least one multivalent salt is selected from the group consisting of a dicarboxylic acid and corresponding carboxylate salt, as well as mixtures thereof. For example, the at least one multivalent salt is selected from the group consisting of dicarboxylic acids (R²(COOH)₂, where R² is an alkyl group CₙH₂ₙ with n between 1 and 10) and corresponding carboxylate salts, as well as mixtures thereof.

In one or more embodiments of the invention, the at least one multivalent salt is succinic acid, or a corresponding carboxylate salt, as well as mixtures thereof.

In one or more embodiments of the invention, the at least one multivalent salt is an oxyacid of phosphorus or corresponding salt, as well as mixtures thereof.

In one or more embodiments of the invention, the at least one multivalent salt is phosphoric acid or a corresponding salt, as well as mixtures thereof.

In one or more embodiments of the invention, the at least one multivalent salt is an organic ampholyte such as a polyamino carboxylic acid or corresponding salt, being totally or substantially hydrolysable into a poly-anion, cation, or zwitterion. Examples of such organic compound include, but are not limited to iminodiacetic acid (IDA), nitrilotriacetic acid (NTA), ethylenediaminetetraacetic acid (EDTA), diethylene triamine pentaacetic acid (DTPA), ethylene glycol tetraacetic acid (EGTA), 1,2-bis(o-aminophenoxy)ethane-N,N,N',N'-tetraacetic acid (BAPTA), 2,2',2"-(1,4,7-triazonane-1,4,7-triyl)triacetic acid (NOTA), 1,4,7,10-tetraazacyclododecane-1,4,7,10-tetraacetic acid (DOTA), or corresponding salts such as alkali metal salt, as well as mixtures thereof.

In one or more embodiments of the invention, the at least one multivalent salt is possibly mixed with one or more other salt, either organic or inorganic, preferably at least one organic or inorganic ionic or ionizable salt, conferring conductive properties to the liquid. Examples of ionic salts include, but are not limited to, alkali metal acetate, trifluoroacetate, triflate, halide, as well as acetic acid, trifluoroacetic acid, triflic acid, carboxylic acid (R¹COOH, where R¹ being an alkyl group C₂ₙH₂ₙ₊₁, with n being between 1 and 10) and corresponding alkali metal salt, as well as mixtures thereof.

In one or more embodiments of the invention, the at least one multivalent salt is possibly mixed with one or more other multivalent salts.

Material engineering of the dielectric enclosure (2) can also be developed to achieve electrowetting effects having large time constants τ. It usually requires dielectric enclosure (2) being resistant to dielectric failure. Generally, hard materials, in which electric charges (e.g. ions) cannot penetrate easily, are good candidates. For example using a Parylene insulating layer coated with a fluoropolymer under DC voltage may lead to time constants τ greater than 1 second.

As the use of fluorinated organic, or inorganic materials, or hybrid organic-inorganic materials formed by sol-gel synthesis are of interest to get larger time constants τ, the Applicant has also found that the use a dielectric enclosure (2) coated with both Parylene C and Cytop® significantly restricts dielectric failures and contact angle decay (under either positive or negative DC voltages, see Figure 5, as well as low frequency AC voltage), as characterized by time constants above 90 seconds for both positive and negative polarizations (τ+ = 580 seconds, τ- = 98 seconds, see table 2). More specifically, Figure 5 shows the evolution of the contact angle (°) of an exemplary electrowetting optical device obtained in a time sequence using NaBr in the conductive liquid (5) with a dielectric enclosure (2) coated with Cytop® and Parylen C, under DC negative and positive polarisation between 10 V and 50 V (10 V steps). Cytop® is a perfluoro polymer bearing perfluorofurane, obtained by cyclopolymerization of perfluoro (alkenyl vinyl ether) and commercialized by Asahi Glass Co. under the trade name Cytop® (Cyclic Transparency Optical Polymer).

**Table 2**

| Substrate | Tau+ (s) | Tau-(s) |
|---|---|---|
| Succinic acid pH=4.5 / Parylene C | >500 | 10 |
| NaBr / Cytop® / Parylene C | 580 | 98 |
| NaBr / Cytop® / SiO₂ | 277 | 73 |
| Succinate / Cytop® / Parylene C | > 1000 | > 1000 |

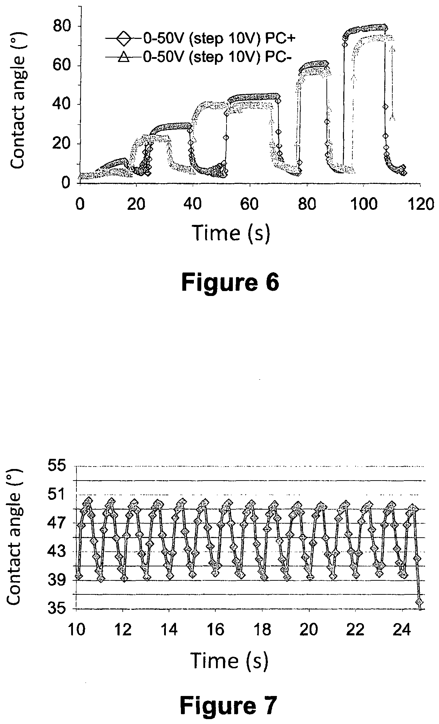

Referring now to Figure 6, as dielectric failure can be limited by either the presence of a multivalent salt in the conductive liquid (5) or by the coating of the dielectric enclosure (2) with Parylene C and Cytop®, the Applicant has also found that the synergistic use of multivalent salts in the conductive liquid (5) and the coating of the dielectric enclosure (2) with Parylene C and Cytop® generates an even slower decrease of the electrowetting effect when applying a DC voltage or a low frequency AC voltage having thus positive and negative time constants τ+ > 1000 seconds and τ- = > 1000 seconds (see table 2). More specifically, Figure 6 shows the evolution of the contact angle (°) of an exemplary electrowetting optical device obtained in a time sequence using succinic acid in the conductive liquid (5) with a dielectric enclosure (2) coated with Cytop® and Parylen C, under DC negative and positive polarisation between 10 V and 50 V (10 V steps).

According to the present invention, the dielectric enclosure (2) is coated with poly-para-xylylene linear polymers, for example, Parylene C; Parylene N, Parylene VT4, and Parylene HT, preferably Parylene C.

According to the present invention, the dielectric enclosure (2) is coated with a thin layer of a low surface energy coating such as Teflon®, Cytop®, or Fluoropel®, preferably Cytop®.

According to the present invention, the dielectric enclosure (2) is coated with poly-para-xylylene linear polymers (for example, Parylene C; Parylene N, Parylene VT4, and Parylene HT), preferably Parylene C, and with a layer of a low surface energy coating (such as Teflon®, Cytop®, or Fluoropel®), preferably Cytop®.

As discussed above, one of the main interests of having limited dielectric failure is to be able to use DC current as power source of the electrowetting optical device. However, depending on the availability of the power, it is also possible to use AC voltage having a low frequency f such as 1 Hz while retaining high contact angle as shown in Figure 7. More specifically, Figure 7 shows the evolution of the contact angle (°) of an exemplary electrowetting optical device obtained in a time sequence using a NaH₂PO₄ in the conductive liquid (5) with a dielectric enclosure (2) coated with Parylen C, under low frequency AC voltage (40 V, 1 Hz).

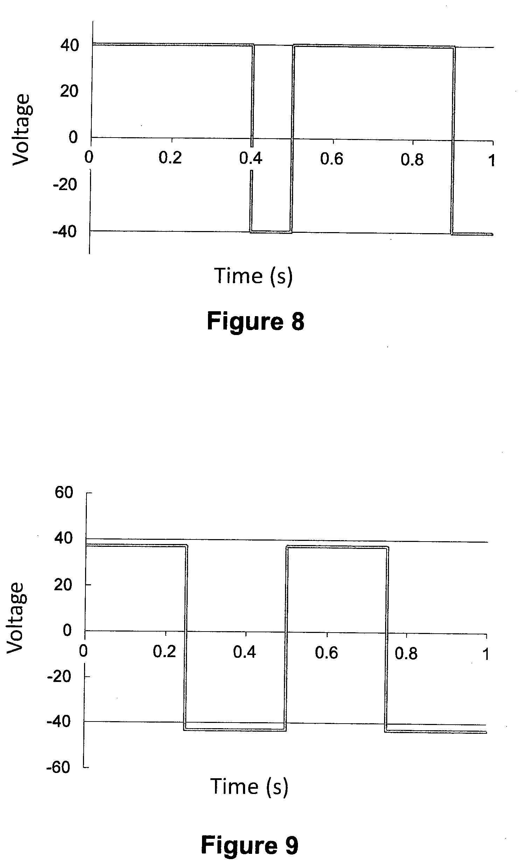

While working with a low frequency AC voltage and depending on the presence of an offset between the positive time constants τ+ and the negative time constant τ- under respective positive and negative polarizations, the Applicant has found that it is also possible to apply waveforms (e.g. square waveform) bearing frequency offsets between positive and negative polarizations. For example, Figure 8 shows a typical square waveform under low frequency AC voltage (40 V, 2 Hz) having a frequency offset with a duty cycle of 80 % corresponding to 400 ms positive polarization and 100 ms negative polarization. Such offset may, for example, correct an 80% offset between a positive time constants τ+ and the negative time constant τ-.

In one or more embodiments of the invention, the amplitude of the contact angle *θ* may also differ depending on whether the polarisation of the applied voltage is positive or negative. The applicant has also found that it is possible to apply an offset in amplitude of the voltage between positive polarization and negative polarization which may allow for the acquisition of a unique and constant amplitude of the contact angle *θ* regardless of the type of polarization (e.g. positive or negative). For example, referring to Figure 9, an offset of 6 V may be applied to a square waveform (e.g. 2Hz AC voltage) between a positive polarization (+37 V) and a negative polarization (-43 V) of

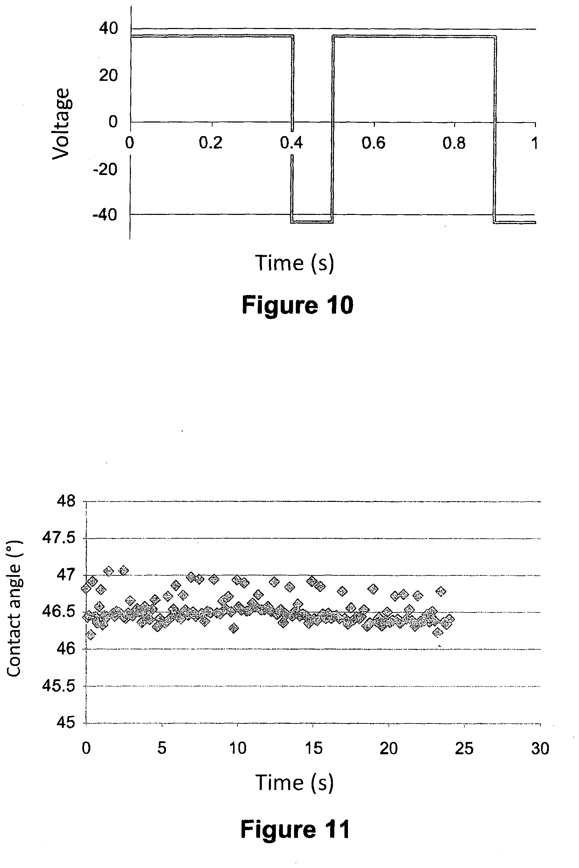

In one or more embodiments of the invention, both polarization offset and duty cycle offset may be combined in a unique waveform, as shown in Figure 10 and 11, which allows for the stabilization of the amplitude of the contact angle *θ* regardless of whether the polarization is positive or negative and regardless of whether positive injection τ+ and negative injection time τ- differ or not. Figure 10 shows a variation compensation square waveform under low frequency AC voltage (2 Hz) with a duty cycle of 80 % (corresponding to 400 ms positive and 100 ms negative) and an offset applied between a positive polarization (+37 V) and a negative polarization (-43 V). Figure 11 shows the evolution of the contact angle (°) of an exemplary electrowetting optical device obtained in a time sequence using NaH₂PO₄ in the conductive liquid (5) with a dielectric enclosure (2) coated with Parylen C, under low frequency AC voltage (2 Hz) with the variation compensation square waveform of Figure 10. More specifically, Figure 11 shows that while the positive time constant τ+ of NaH₂PO₄ is five time larger than the negative time constant τ- (106 seconds and 21 seconds, respectively, see table 1), and while the contact angle under positive polarization is greater than under negative polarization, using the waveform of Figure 10 has for effect to stabilize the contact angle between 46° and 47°. Therefore, once an embodiment having low dielectric failure is selected, it may be optimized further by applying a specific waveform adapted to the physical properties of the various components of the electrowetting optical device.

In one or more embodiments of the invention, conductive liquid (5) and non-conductive liquid (4) have a low mutual miscibility over a broad temperature range. Preferably, the broad temperature range is from -30°C to 85°C, more preferably from -20°C to 65°C.

In one or more embodiments of the invention, in addition to the multivalent salts, the water to be used in the conductive liquid (5) is as pure as possible, i.e. free, or substantially free, of any other dissolved components that could alter the optical properties of the electrowetting optical device. Ultra pure water is most preferably used. In the present description and in the following claims, "water as pure as possible" is intended to indicate a water solution comprising less than 5000 ppm of ions, such as for example halides, alkaline metals, alkaline earth metals, or transition metal, etc... in a ionic form. Preferably, the solution may contain less than 2000 ppm of ions, preferably less than 1000 ppm of ions, preferably less than 500 ppm of ions. The water to be used may contain less than 300 ppm, preferably less than 100 ppm, preferably less than 50 ppm, preferably less than 10 ppm, preferably less than 5 ppm of ions.

In one or more embodiments of the invention, the conductive liquid (5) has a refractive index lower than the refractive index of the non-conductive liquid (4).

In one or more embodiments of the invention, the conductive liquid (5) has a refractive index below 1.39, preferably below 1.37, preferably while having a freezing point below -20°C.

In one or more embodiments of the invention, the conductive liquid (5) comprises at least one freezing-point lowering agent. Preferred freezing-point lowering agents comprise alcohol, glycol, glycol ether, polyol, polyetherpolyol and the like, or mixtures thereof. Examples thereof include ethylene glycol, 1,3-propanediol or 1,2-propanediol.

In one or more embodiments of the invention, the conductive liquid (5) preferably comprises less than 30 % by weight of freezing-point lowering agent, preferably less than 20 %, preferably less than 10 % by weight, and preferably more than 1 % based on the total weight of the conductive liquid (5). Preferably, the conductive liquid (5) comprises glycol, preferably ethylene glycol or 1,3-propanediol (also known as Trimethylene glycol or TMG).

One of the advantages of using glycols in combination with salts as freezing-point lowering agents is to avoid an excessive increase of the conductive liquid (5) density. Preferably, the conductive liquid (5) density is below 1.2 g/cm³ at 20°C. For a given freezing point, a solution of salt and water has comparably a higher density than a solution of glycols and water. Glycols having compounds such as R-(OH)₂, R being an alkyl group, preferably a C₂-C₄ alkyl, are preferably used. Such glycols show a low miscibility with components of the non-conductive liquid (4), and thus they do not compromise the electrowetting device reliability.

Another advantage of using glycols in the conductive liquid (5) is that they act as viscosity-controlling agents. The viscosity is related to the response time of the electrowetting optical device, and controlling viscosity, in particular lowering viscosity provides rapid electrowetting optical devices with short response time.

The use of anti-freezing agents such as salts and/or glycols, preferably the glycols previously described, allows the conductive liquid (5) to remain liquid within a temperature range from -30°C to +85°C, preferably from -20°C to +65°C, more preferably from -10°C to +65°C.

According to another preferred embodiment, the conductive liquid (5) contains less than 5 % by weight of an additive such as for example pentanol, or polypropylene glycol, preferably having an average molecular weight from 200 g/mol to 2000 g/mol, more preferably from 200 g/mol to 1000 g/mol, still more preferably from 350 g/mol to 600 g/mol, still more preferably from 350 g/mol to 500 g/mol, preferably from 375 g/mol to 500 g/mol, for example of 425 g/mol, or a mixture thereof. One advantage of using such additives is that they act as surfactants allowing to provide steady interface tension between the two liquids over a broad range of temperature.

In one or more embodiments of the invention, the non-conductive liquid (4) comprises at least one compound having a refractive index higher than 1.55, preferably higher than 1.60, more preferably greater than 1.63, and even more preferably greater than 1.66.

In one or more embodiments of the invention, the non-conductive liquid (4) may comprise at least one of the following compound: diphenydimethylsilane, 2-(ethylthio)benzothiazole, 1-chloronaphtalene, Santolight™ SL-5267, commercially available from SantoVac Fluids (now SantoLubes LLC, Missouri, US) or a chemically similar liquid, thianaphtene, 4-bromodiphenyl ether, 1-phenylnaphtalene, 2.5-dibromotoluene, phenyl sulphide, and the like, or mixtures thereof.

The composition of the non-conductive liquid (4) is preferably chosen such that its viscosity, its refractive index, its density and its miscibility with the conductive liquid (5) are suited for providing a performing electrowetting device within a broad temperature range. Numerous non-conductive components may fulfill the requirements in terms of refractive index, for example compounds having preferably a refractive index higher than 1.55. However the compounds used in the non-conductive liquid (4) are also preferably chosen according to other parameters allowing providing a performing electrowetting optical device. These parameters are for example: miscibility with water: the non-conductive liquid (4) should preferably have a low miscibility with water in the preferred temperature range; chemical stability: compounds used in the non-conductive liquid (4) should be preferably chemically stable, i.e. they should not exhibit chemical reactivity in presence of other compounds of the conductive and non-conductive liquids (4) or within the functional temperature range; density: a high density to be able to match the density of the conductive liquid (5), in the sense that the difference in density of the two liquids should be preferably limited, preferably lower than 0.1 g/cm³, more preferably lower than 0.01 g/cm³, even more preferably lower than 3.10⁻³ g/cm³, the density being measured at 20°C; and viscosity: a viscosity as low as possible, preferably lower than 40 cs, preferably lower than 20 cs and even preferably lower than 10 cs in a temperature range comprised between -20 °C and +70°C, to allow obtaining a low response time electrowetting device.

The list of cited parameters, together with the refractive index parameter, is not limitative and other parameters can be taken into account for the choice of compounds of the non-conductive liquid (4).

In one or more embodiments of the invention, the non-conductive liquid (4) may comprise from 30 % to 80 % by weight, based on the total weight of the non-conductive liquid (4), of a compound of formula 1a or 1b, or a mixture of compounds thereof: 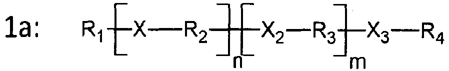 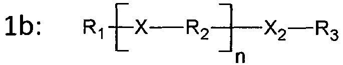 wherein each of R₁ and R₄ is a non substituted aromatic ring; R₂ and R₃ are each chosen from alkyl, cycloalkyl, (hetero)aryl, (hetero)arylalkyl; n and m are independently each 1-5, preferably 1-2; and X, X₂ and X₃ are each independently chosen from oxygen (O) or sulfur (S) atoms. In the above formulae: alkyl means a straight or branched alkyl radical having from about 1 to about 10 carbon atoms, preferably from about 1 to about 6 carbon atoms, preferred alkyl includes methyl, ethyl, n propyl, iso propyl); (hetero)aryl means an aromatic or heteroaromatic radical containing from about 5 to about 12 atoms, forming at least one, preferably one, aromatic and/or heteroaromatic ring, said ring(s) being optionally substituted by one or more halogens, preferably 1, 2, 3 halogen atoms (mainly fluorine, chlorine and/or bromine); and (hetero)arylalkyl is as defined above for each of the alkyl and (hetero)aryl radical, preferred (hetero)arylalkyls include benzyl, phenethyl, optionally substituted with 1, 2 or 3 halogen atoms.

In one or more embodiments of the invention, the compound of formula 1a or 1b is a phenyl ether oligomer, a phenyl thioether oligomer and the like, for example thiobis[phenoxybenzene], bis(phenylmercapto)benzene, or similar 3,4 ring phenylether/thioether oligomers. The upper preferred limit is preferably related to viscosity: it allows not increasing too much the viscosity of the non-conductive liquid (4) and to provide a low response time electrowetting device.

A further advantage of such an embodiment is that the non-conductive liquid (4) is more chemically stable with the conductive liquid (5). Such compounds used in the non-conductive liquid (4) have low reactivity with water, including at elevated temperature, for example above 50°C.

In one or more embodiments of the invention, compounds having a high density, for example density from 1.2 g/cm³ at 20°C, are preferably used in the non-conductive liquid (4). This allows a density matching with the density of the conductive liquid (5), especially when high amounts of salts, generally increasing the density of a solution, are solubilized in the conductive liquid (5).

In one or more embodiments of the invention, the non-conductive liquid (4) has a refractive index greater than 1.60, more preferably greater than 1.64, and even more preferably more than 1.66. In one or more embodiments of the invention, the difference in refractive index between the conductive and the non-conductive liquid (4) is greater than 0.24, preferably greater than 0.27, and more preferably greater than 0.29.

In one or more embodiments of the invention, viscosity-controlling agents, especially viscosity lowering agents are used in the non-conductive liquid (4) to lower the response time of the electrowetting optical device. Such compounds are preferably used to lower the viscosity of the non-conductive liquid (4), in particular when other compounds, such as phenyl thioether oligomers contained in the non-conductive liquid (4) tend to increase its viscosity. Such viscosity-controlling agents, such as for example diphenyl sulfide, dibromotoluene, diphenyldimethylsilane, thianaphtene, or mixtures thereof, have preferably a high refractive index, preferably such that the non-conductive liquid (4) keeps a high refractive index while having its viscosity lowered.

In one or more embodiments of the invention, the non-conductive liquid (4) comprises an anti-oxidant compound, such as for example the BHT-type (butylated hydroxytoluene) anti-oxidants, preferably 2,6-di-tert-butyl-4-methylphenol.

While the disclosure has been presented with respect to a limited number of embodiments, those skilled in the art, having benefit of this disclosure, will appreciate that other embodiments may be devised which do not depart from the scope of the present disclosure. Accordingly, the scope of the invention should be limited only by the attached claims.

## Claims

1. A method for controlling an electrowetting optical device comprising:
Applying, in a dielectric enclosure (2) of the electrowetting optical device, a direct current voltage or an alternative current voltage having a frequency f lower than 10 Hz to a liquid/liquid interface formed by a non-conductive liquid (4) and a conductive liquid (5) and movable by electrowetting under the application of the voltage,
wherein the conductive liquid (5) comprises at least one multivalent salt; and
wherein the dielectric enclosure (2) is coated with both a poly-para-xylylene linear polymer and with a layer of a low surface energy coating.

2. The method according to claim 1, wherein the at least one multivalent salt is a di-cationic or a tri-cationic inorganic compound.

3. The method according to claim 1 or claim 2, wherein the at least one multivalent salt is an alkaline-earth metal, as well as mixtures thereof.

4. The method according to any of claims 1 to 3, wherein the at least one multivalent salt is calcium chloride.

5. The method according to any of claims 1 to 4 wherein a frequency offset is applied between a positive polarization and a negative polarization.

6. The method according to any of claims 1 to 5, wherein an offset in amplitude of the voltage is applied between a positive polarization and a negative polarization.

7. An apparatus comprising:
an electrowetting optical device comprising:
a dielectric enclosure (2),
a non-conductive liquid (4), and
a conductive liquid (5),
wherein the non-conductive liquid (4) and the conductive liquid (5) form a liquid/liquid interface movable by electrowetting under the application of a voltage,
wherein the conductive liquid (5) comprises at least one multivalent salt, and
wherein the dielectric enclosure (2) is coated with both a poly-para-xylylene linear polymer and with a layer of a low surface energy coating; and
electronic means for applying a direct current voltage or an alternative current voltage having a frequency f lower than 10 Hz to the liquid/liquid interface.

8. The apparatus according to claim 7, wherein the at least one multivalent salt is a di-cationic or a tri-cationic inorganic compound.

9. The apparatus according to claim 7 or claim 8, wherein the at least one multivalent salt is an alkaline-earth metal, as well as mixtures thereof.

10. The apparatus according to any of claims 7 to 9, wherein the at least one multivalent salt is calcium chloride.

11. The apparatus according to any of claims 7 to 10, wherein a frequency offset is applied between a positive polarization and a negative polarization.

12. The apparatus according to any of claims 7 to 11, wherein an offset in amplitude of the voltage is applied between a positive polarization and a negative polarization.

13. The apparatus according to any of claims 7 to 12, wherein the apparatus is an automatic focusing ophthalmic device, a camera, a cell phone, or a barcode reader.

14. The apparatus according to any of claims 7 to 13, wherein the apparatus is an intraocular lens implant, a contact lens, eyeglasses, or ophthalmology instruments.

## Patentansprüche

1. Verfahren zur Steuerung einer optischen Elektrobenetzungsvorrichtung, umfassend
Anlegen einer Gleichstromspannung oder einer Wechselstromspannung mit einer unter 10 Hz liegenden Frequenz f an eine Flüssigkeits-/Flüssigkeits-Grenzfläche, die von einer nichtleitfähigen Flüssigkeit (4) und einer leitfähigen Flüssigkeit (5) gebildet und durch Elektrobenetzung aufgrund des Anlegens der Spannung bewegbar ist, in einem dielektrischen Gehäuse (2) der optischen Elektrobenetzungsvorrichtung,
wobei die leitfähige Flüssigkeit (5) wenigstens ein multivalentes Salz umfasst; und
wobei das dielektrische Gehäuse (2) mit einem linearen Poly-para-Xylylen-Polymer und einer Schicht einer Beschichtung mit geringer Oberflächenenergie beschichtet ist.

2. Verfahren gemäß Anspruch 1, wobei das wenigstens eine multivalente Salz eine dikationische oder trikationische anorganische Verbindung ist.

3. Verfahren gemäß Anspruch 1 oder 2, wobei das wenigstens eine multivalente Salz ein Erdalkalimetall ist sowie Mischungen davon.

4. Verfahren gemäß einem der Ansprüche 1 bis 3, wobei das wenigstens eine multivalente Salz Calciumchlorid ist.

5. Verfahren gemäß einem der Ansprüche 1 bis 4, wobei eine Frequenzabweichung zwischen einer positiven Polarisation und einer negativen Polarisation angelegt wird.

6. Verfahren gemäß einem der Ansprüche 1 bis 5, wobei eine Spannungs-Amplitudenabweichung zwischen einer positiven Polarisation und einer negativen Polarisation angelegt wird.

7. Vorrichtung, umfassend:
eine optische Elektrobenetzungsvorrichtung, umfassend
ein dielektrisches Gehäuse (2),
eine nichtleitfähige Flüssigkeit (4), und
eine leitfähige Flüssigkeit (5),
wobei die nichtleitfähige Flüssigkeit (4) und die leitfähige Flüssigkeit (5) eine Flüssigkeits-/Flüssigkeits-Grenzfläche bilden, die bei Anlegen einer Spannung durch Elektrobenetzung bewegbar ist,
wobei die leitfähige Flüssigkeit (5) wenigstens ein multivalentes Salz umfasst, und
wobei das dielektrische Gehäuse (2) mit einem linearen Poly-para-Xylylen-Polymer und
einer Schicht einer Beschichtung mit geringer Oberflächenenergie beschichtet ist;
und
elektronische Mittel zum Anlegen einer Gleichstromspannung oder einer Wechselstromspannung mit einer unter 10 Hz liegenden Frequenz f an die Flüssigkeits-/Flüssigkeits-Grenzfläche.

8. Vorrichtung gemäß Anspruch 7, wobei das wenigstens eine multivalente Salz eine dikationische oder eine trikationische Verbindung ist.

9. Vorrichtung gemäß Anspruch 7 oder 8, wobei das wenigstens eine multivalente Salz ein Erdalkalimetall ist sowie Mischungen davon.

10. Vorrichtung gemäß einem der Ansprüche 7 bis 9, wobei das wenigstens eine multivalente Salz Calciumchlorid ist.

11. Vorrichtung gemäß einem der Ansprüche 7 bis 10, wobei eine Frequenzverschiebung zwischen einer positiven Polarisierung und einer negativen Polarisierung angelegt wird.

12. Vorrichtung gemäß einem der Ansprüche 7 bis 11, wobei eine Spannungs-Amplitudenverschiebung zwischen einer positiven Polarisierung und einer negativen Polarisierung angelegt wird.

13. Vorrichtung gemäß einem der Ansprüche 7 bis 12, wobei die Vorrichtung eine ophthalmische Autofokussiervorrichtung, eine Kamera, ein Mobiltelefon oder ein Barcode-Leser ist.

14. Vorrichtung gemäß einem der Ansprüche 7 bis 13, wobei die Vorrichtung ein intraokulares Linsenimplantat, eine Kontaktlinse, ein Brillenglas ist oder ophthalmologische Instrumente.

## Revendications

1. Procédé permettant de commander un dispositif optique d'électromouillage, ledit procédé comprenant :
l'application, dans une enceinte diélectrique (2) du dispositif optique d'électromouillage, d'une tension en courant continu ou une tension en courant alternatif qui présente une fréquence (f) inférieure à 10 Hz à une interface liquide/liquide formée par un liquide non conducteur (4) et un liquide conducteur (5) et mobile par électromouillage lors de l'application de la tension,
dans lequel le liquide conducteur (5) comprend au moins un sel multivalent ; et
dans lequel l'enceinte diélectrique (2) est revêtue à la fois d'un polymère linéaire de poly-para-xylylène et d'une couche d'un revêtement à faible tension superficielle.

2. Procédé selon la revendication 1, dans lequel l'au moins un sel multivalent est un composé inorganique di-cationique ou tri-cationique.

3. Procédé selon la revendication 1 ou la revendication 2, dans lequel l'au moins un sel multivalent est un sel métallique alcalino-terreux, ainsi que des mélanges de celui-ci.

4. Procédé selon l'une quelconque des revendications 1 à 3, dans lequel l'au moins un sel multivalent est du chlorure de calcium.

5. Procédé selon l'une quelconque des revendications 1 à 4, dans lequel un décalage de fréquence est appliqué entre une polarisation positive et une polarisation négative.

6. Procédé selon l'une quelconque des revendications 1 à 5, dans lequel un décalage en amplitude de la tension est appliqué entre une polarisation positive et une polarisation négative.

7. Appareil comprenant :
un dispositif optique d'électromouillage comprenant :
une enceinte diélectrique (2),
un liquide non conducteur (4), et
un liquide conducteur (5),
dans lequel le liquide non conducteur (4) et le liquide conducteur (5) forment une interface liquide/liquide mobile par électromouillage lors de l'application d'une tension,
dans lequel le liquide conducteur (5) comprend au moins un sel multivalent ; et
dans lequel l'enceinte diélectrique (2) est revêtue à la fois d'un polymère linéaire de poly-para-xylylène et d'une couche d'un revêtement à faible tension superficielle ; et
des moyens électroniques d'application d'une tension de courant continu ou d'une tension de courant alternatif qui présente une fréquence (f) inférieure à 10 Hz à l'interface liquide/liquide.

8. Appareil selon la revendication 7, dans lequel l'au moins un sel multivalent est un composé inorganique di-cationique ou tri-cationique.

9. Appareil selon la revendication 7 ou la revendication 8, dans lequel l'au moins un sel multivalent est un sel métallique alcalino-terreux, ainsi que des mélanges de celui-ci.

10. Appareil selon l'une quelconque des revendications 7 à 9, dans lequel l'au moins un sel multivalent est du chlorure de calcium.

11. Appareil selon l'une quelconque des revendications 7 à 10, dans lequel un décalage de fréquence est appliqué entre une polarisation positive et une polarisation négative.

12. Appareil selon l'une quelconque des revendications 7 à 11, dans lequel un décalage dans l'amplitude de la tension est appliqué entre une polarisation positive et une polarisation négative.

13. Appareil selon l'une quelconque des revendications 7 à 12, dans lequel l'appareil est un dispositif ophtalmique de mise au point automatique, une caméra, un téléphone portable ou un lecteur de code-barres.

14. Appareil selon l'une quelconque des revendications 7 à 13, dans lequel l'appareil est un implant de lentille intraoculaire, une lentille de contact, des lunettes, ou des instruments d'ophtalmologie.
